Europäisches Patentamt

European Patent Office

Office européen des brevets

(19)

(11) Numéro de publication : **0 056 983**
**B1**

(12) **FASCICULE DE BREVET EUROPÉEN**

(45) Date de publication du fascicule du brevet :
13.06.84

(51) Int. Cl.³ : **F 28 F 11/00, C 03 C 3/30, C 03 C 3/12, B 28 B 19/00**

(21) Numéro de dépôt : 82100388.6

(22) Date de dépôt : 21.01.82

(54) Procédé d'obturation sélective des extrémités de canaux parallèles de structures céramiques, et composition pâteuse pour sa mise en oeuvre.

(30) Priorité : 26.01.81 FR 8101374
24.06.81 FR 8112372

(43) Date de publication de la demande :
04.08.82 Bulletin 82/31

(45) Mention de la délivrance du brevet :
13.06.84 Bulletin 84/24

(84) Etats contractants désignés :
BE CH DE FR GB IT LI NL SE

(73) Titulaire : **COMPAGNIE GENERALE D'ELECTRICITE**
Société anonyme dite:
54, rue La Boétie
F-75382 Paris Cedex 08 (FR)

(72) Inventeur : **Kaltenbach, Guy**
9, avenue de la Tranquillité
F-78000 Versailles (FR)
Inventeur : **Lerner, Pierre**
58, Allée du Fief Lambert Chevry
F-91190 Gif-sur-Yvette (FR)

(74) Mandataire : **Weinmiller, Jürgen et al**
Zeppelinstrasse 63
D-8000 München 80 (DE)

(56) Documents cités :
DE-A- 1 646 657
DE-A- 2 209 283
FR-A- 2 436 958
GB-A- 2 048 237
US-A- 4 021 256
CHEMICAL ABSTRACTS; volume 87, 1977, page 248, abrégé 43249b COLUMBUS OHIO (US)
CHEMICAL ABSTRACTS, volume 83, no. 10, 8 septembre 1975, page 310, abrégé 83941v COLUMBUS OHIO (US)
JOURNAL OF THE AMERICAN CERAMIC SOCIETY, volume 57, no. 5, mai 1974 American Ceramic Society COLUMBUS OHIO (US) J.A. TOPPING et al. "Properties and structure of glasses in the system PbO-GeO2", pages 209-212
THE SOVIET JOURNAL OF GLASS PHYSICS & CHEM., volume 5, no. 5, septembre/octobre 1979 Plenum Publishing Corp. NEW YORK (US) E.M. MILYUKOV et al. "Glass-forming regions and the optical properties of some borate and germanate glass systems containing Bi2O3 or PbO" pages 551-552

(56) Documents cités :
JOURNAL OF GLASS PHYSICS & CHEM. volume 3, no. 5 septembre/octobre 1977 Plenum Publishing Corp. NEW YORK (US) K.A. KOSTANYAN et al. « Effect of oxides of alkaline earth metals on physico-chemical properties of borogermanate glasses », pages 483-486.

**Description**

La présente invention concerne un procédé d'obturation sélective des extrémités de canaux parallèles de structures céramiques.

Elle s'étend en outre à une composition pâteuse pour la mise en œuvre de ce procédé.

On a déjà décrit dans le document FR-A2-n° 2436958 de la Société Ceraver un élément d'échange de chaleur à canaux parallèles obtenu par extrusion, dans lequel on masque provisoirement les extrémités d'une première série de canaux, à maintenir ouvertes, par des écrans amovibles en matière souple, on trempe dans une barbotine visqueuse l'extrémité de l'élément d'échange de façon à la faire pénétrer dans les extrémités d'une deuxième série de canaux, non masquées, on soumet à une cuisson l'élément d'échange, afin de fixer la barbotine ayant pénétré dans les extrémités de cette deuxième série de canaux, et on retire les écrans amovibles pour libérer les ouvertures des canaux de la première série. Un tel procédé est relativement long, puisqu'il exige que l'on masque provisoirement une à une chaque rangée de canaux dont l'extrémité est à maintenir ouverte, et il est difficile à appliquer sur des structures à canaux de petite dimension transversale.

La présente invention a pour but de procurer un procédé d'obturation sélective d'extrémités de tels canaux que soit plus facile et plus rapide à mettre en œuvre, et qui s'applique sans difficulté même à des canaux de faible dimension transversale, de quelques millimètres ou encore moins.

Le procédé selon l'invention est caractérisé en ce que l'on prépare une composition pâteuse à phase solide comprenant une poudre d'un verre de coefficient de dilatation voisin de celui de la structure céramique, et à phase liquide contenant un solvant, un plastifiant et un ajout diminuant l'adhérence de la pâte sur un organe d'application, en ce que l'on refoule dans les extrémités des canaux à obturer ladite pâte à l'aide de l'organe d'application, et en ce que l'on soumet la structure céramique à un traitement thermique assurant l'adhérence de la pâte sur les parois des canaux, puis sa solidification.

Il répond en outre de préférence à au moins l'une des caractéristiques suivantes :

— L'on refoule la composition pâteuse dans les extrémités des canaux à obturer par sérigraphie ou au pochoir.

— L'on refoule la composition pâteuse dans les extrémités des canaux à obturer sous l'effet d'un peigne râcleur ou d'une pression gazeuse.

— L'on refoule la composition pâteuse dans les extrémités des canaux à obturer à l'aide d'une ou plusieurs seringues à déplacement programmé.

L'invention s'étend en outre à une composition pâteuse pour la mise en œuvre du procédé défini ci-dessus, caractérisée en ce qu'elle comprend au moins 70 % en poids de phase solide.

Elle répond également de préférence à au moins l'une des caractéristiques suivantes :

— La phase solide comprend en majeure partie une poudre du matériau de la structure céramique, le complément étant essentiellement constitué par le verre.

— Le verre comprend en proportions molaires de 18 à 80 % de silice, de 3 à 13 % d'alumine, de 9 à 60 % d'anhydride borique, de 0 à 5,5 % d'oxyde de zinc, de 0 à 17 % d'oxyde de baryum et de 0 à 14 % d'oxyde de sodium.

— Le verre comprend environ 71 % de silice, 3,7 % d'alumine, 15,5 % d'anhydride borique, 1,5 % d'oxyde de zinc et 8 % d'oxyde de sodium.

— Le verre comprend environ 23 % de silice, 8 % d'alumine, 51 % d'anhydride borique, 15 % d'oxyde de baryum et 2,7 % d'oxyde de sodium.

— Le verre comprend en proportions molaires de 50 à 80 % d'oxyde de germanium, 1 à 30 % d'oxyde de magnésium, 0 à 20 % d'oxyde de calcium, 0 à 20 % d'oxyde de strontium, 0 à 20 % d'oxyde de zinc, 1 à 10 % d'alumine, 0 à 50 % de monoxyde de plomb, 0 à 10 % d'oxyde de sodium et/ou de potassium, et de 0 à 20 % de fluorure de strontium.

— Le verre comprend en proportions molaires environ 60 % d'oxyde de germanium, 10 % d'oxyde de magnésium, 10 % d'oxyde de calcium, 5 % d'oxyde de zinc, 10 % d'alumine et 5 % d'oxyde de sodium.

— Le verre comprend en proportions molaires environ 57 % d'oxyde de germanium, 9,5 % d'oxyde de magnésium, 14 % d'oxyde de calcium, 5 % d'oxyde de zinc, 5 % d'alumine et 10 % de monoxyde de plomb.

— Le verre comprend en proportions molaires de 40 à 80 % d'oxyde de germanium, 6 à 30 % d'anhydride borique, 0 à 20 % d'oxyde de calcium, 0 à 20 % d'oxyde de zinc et 0 à 50 % de monoxyde de plomb, et de préférence environ 43 % d'oxyde de germanium, 26 % d'anhydride borique, 16 % d'oxyde de calcium, 11 % d'oxyde de zinc et 4 % de monoxyde de plomb.

— Le verre comprend en proportions molaires de 30 à 80 % d'oxyde de germanium, 6 à 30 % d'anhydride borique, 0 à 20 % d'oxyde de calcium, 0 à 20 % d'oxyde de magnésium, 0 à 20 % d'oxyde de zinc, 5 à 20 % d'alumine et 0 à 50 % de monoxyde de plomb, et de préférence environ 37,5 % d'oxyde de germanium, 28 % d'anhydride borique, 7 % d'oxyde de calcium, 10 % d'oxyde de magnésium, 9,5 % d'oxyde de zinc et 8 % d'alumine.

— Le verre comprend en proportions molaires au moins 30 % d'anhydride borique, 1 à 55 % d'oxyde de zinc, 0 à 5 % d'anhydride vanadique et 0 à 5 % d'alumine, et de préférence environ 37 % d'anhydride borique, 54 % d'oxyde de zinc, 5 % d'anhydride vanadique et 4 % d'alumine.

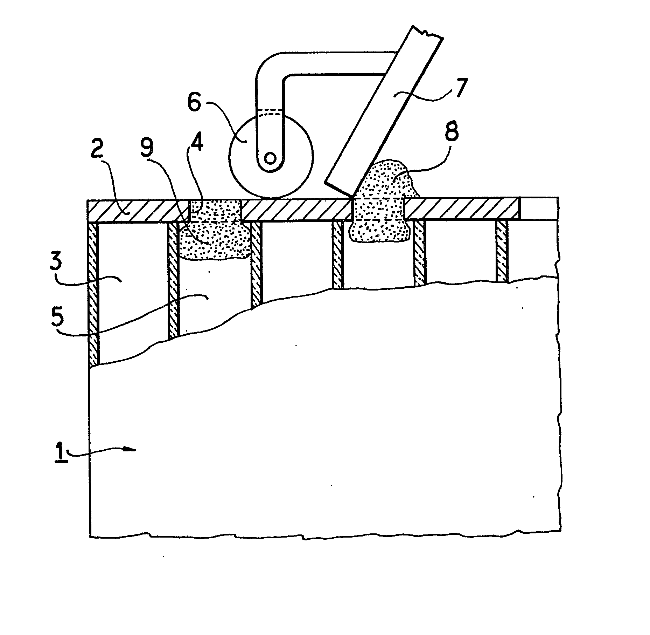

Il est décrit ci-après, à titre d'exemple et en référence à la figure unique du dessin annexé, un procédé d'obturation sélective d'une rangée sur deux de canaux d'une structure rectangulaire en nid d'abeilles

2

d'un élément d'échange de chaleur, une composition pâteuse pour l'obturation des canaux et des compositions de verres destinés à être incorporés dans la composition pâteuse.

La figure unique représente très schématiquement un dispositif d'obturation sélective au pochoir d'une rangée sur deux de canaux parallèles d'un élément d'échange de chaleur en alumine 1.

Un pochoir 2 disposé sur la face d'extrémité des canaux comporte des ouvertures alternées ne permettant l'accès qu'aux extrémités d'une rangée de canaux sur deux. On comprendra que les rangées de canaux et le pochoir s'étendent perpendiculairement au plan de la figure. Les canaux tels que 3 sont provisoirement masqués par le pochoir, cependant que les ouvertures 4 du pochoir laissent libres les extrémités des canaux 5. Un rouleau 6 à raclette 7 repousse et refoule au passage de chaque ouverture une certaine masse de la composition pâteuse 8 dans cette ouverture. La masse 9 bouche l'extrémité du canal 5 correspondant et vient affleurer les bords de l'ouverture 4 du pochoir.

La composition pâteuse 9 est préparée comme suit.

On prépare un verre de la composition molaire suivante :

| | |
|---|---|
| Oxyde de germanium $GeO_2$ | 60 % |
| Oxyde de calcium CaO | 10 % |
| Oxyde de magnésium MgO | 10 % |
| Oxyde de zinc ZnO | 5 % |
| Alumine $Al_2O_3$ | 10 % |
| Oxyde de sodium $Na_2O$ | 5 % |

Ce verre est préparé de la manière habituelle en mélangeant intimement les proportions désirées de poudres finement divisées de ses constituants, puis en fondant le mélange au fou électrique. On laisse ensuite le mélange fondu s'affiner, puis le coule et le broie.

La poudre obtenue est intiment mélangée dans le rapport pondéral de 75 % de poudre pour 25 % de liquide, avec une fraction liquide de la composition pondérale suivante :

| | | |
|---|---|---|
| Lanoline | 40 | g |
| Huile de ricin | 34 | g |
| Ethyl-cellulose (liant) | 0,2 | g |
| Solvant éther butylique de l'éthylène-glycol | 65 | g |
| (marque Ethyl-Cellosolve) | | |
| Dibutylphtalate (plastifiant) | 34 | g |

La lanoline a pour effet de diminuer l'adhérence de la pâte sur le pochoir. On peut aussi utiliser comme solvant l'éther monoéthylique de l'éthylène-glycol.

La pâte obtenue est alors appliquée au pochoir comme il a été indiqué ci-dessus.

Une fois bouchées toutes les extrémités désirées des canaux, on sèche la pâte en évaporant le solvant, puis effectue une cuisson de façon à faire adhérer parfaitement les bouchons formés par le verre aux parois des extrémités des canaux. Le verre obtenu a un coefficient de dilatation linéaire de 7, $4 \cdot 10^{-6}$/d °C entre 20° et 500 °C, très voisin de celui de l'alumine ($7,2 \cdot 10^{-6}$/d °C de 20° à 400 °C). L'obturation des canaux reste dès lors parfaitement étanche en dépit des dilatations et contractions thermiques de l'élément d'échange de chaleur.

On peut utiliser à la place du verre de la composition ci-dessus un verre au monoxyde de plomb, de composition molaire

| | | |
|---|---|---|
| Oxyde de germanium | 56,95 | % |
| Oxyde de calcium | 14,2 | % |
| Oxyde de magnésium | 9,5 | % |
| Oxyde de zinc | 4,7 | % |
| Alumine | 4,7 | % |
| Monoxyde de plomb | 10 | % |

Un tel verre a un coefficient de dilatation linéaire de $6,85 \cdot 10^{-6}$/d °C entre 20° et 500 °C, également très voisin de celui de l'alumine.

On peut également utiliser les verres siliceux A et B ci-dessous, de compositions molaires respectives.

| | A | B |
|---|---|---|
| Silice | 71 % | 23,3 % |
| Alumine | 3,75 % | 8 % |
| Anhydride borique | 15,5 % | 51 % |
| Oxyde de zinc | 1,55 % | |
| Oxyde de baryum | | 15 % |
| Oxyde de sodium | 8,2 % | 2,7 % |

Les verres A et B possèdent respectivement des coefficients de dilatation linéaire de $5,1 \cdot 10^{-6}$/d °C et $6,6 \cdot 10^{-6}$/d °C entre 20° et 500°C.

Le verre à l'anhydride borique de composition molaire

| | |
|---|---|
| Anhydride borique | 36,8 % |
| Oxyde de zinc | 54,1 % |
| Alumine | 4,3 % |
| Anhydride vanadique $V_2O_5$ | 4,8 % |

convient également. Son coefficient de dilatation linéaire est de $5,3 \cdot 10^{-6}$/d °C entre 20° et 500 °C.

Le verre de composition molaire

| | |
|---|---|
| Oxyde de germanium | 43 % |
| Anhydride borique | 26 % |
| Oxyde de calcium | 16 % |
| Oxyde de zinc | 11 % |
| Monoxyde de plomb | 4 % |

présente un coefficient de dilatation linéaire de $6,35 \cdot 10^{-6}$/d °C entre 20° et 500 °C. Il fond par ailleurs dans une zone de température plus basse que les verres précédents, sa fusion étant complète au-dessous de 1 000 °C.

Le verre de composition molaire

| | |
|---|---|
| Oxyde de germanium | 37,5 % |
| Anhydride borique | 28 % |
| Oxyde de calcium | 7 % |
| Oxyde de magnésium | 10 % |
| Oxyde de zinc | 9,5 % |
| Alumine | 8 % |

présente une température de fusion d'environ 970 °C et un coefficient moyen de dilatation linéaire entre 30° et 400 °C de $6,2 \cdot 10^{-6}$/d °C.

Si l'on utilisait un verre de la même composition générale, mais exempt d'alumine, il se formerait deux phases au cours de la fusion et il se produirait une certaine recristallisation au refroidissement.

Les verres ci-dessus conviennent pour l'obturation d'extrémités de canaux en alumine, certaines de ces compositions peuvent être utilisées avec d'autres matériaux tels que le carbure de silicium ou la mullite.

L'application de la pâte dans les extrémités des canaux peut aussi s'effectuer par sérigraphie. On peut refouler la pâte à l'aide d'un peigne râcleur ou sous l'effet d'une pression gazeuse. On peut aussi introduire dans les extrémités des canaux des quantités dosées de pâte à l'aide d'une ou plusieurs seringues à déplacement programmé de façon à ne se présenter que devant les extrémités des canaux à obturer.

Pour assurer une meilleure concordance des coefficients de dilatation thermique du matériau d'obturation et de la structure céramique, notamment lorsque l'on ne dispose pas de verre de coefficient de dilatation pleinement satisfaisant, on peut employer un matériau d'obturation contenant en majeure partie une poudre du matériau de la structure céramique, le reste étant essentiellement constitué par un verre.

## Revendications

1. Procédé d'obturation sélective des extrémités de canaux parallèles (3, 5) de structures céramiques, caractérisé en ce que l'on prépare une composition pâteuse (8) à phase solide comprenant une poudre d'un verre de coefficient de dilatation voisin de celui de la structure céramique, et à phase liquide contenant un solvant, un plastifiant et un ajout diminuant l'adhérence de la pâte sur un organe d'application, en ce que l'on refoule dans les extrémités des canaux à obturer (5) ladite pâte à l'aide de l'organe d'application (7), et en ce que l'on soumet la structure céramique à un traitement thermique assurant l'adhérence de la pâte sur les parois des canaux, puis sa solidification.

2. Procédé selon la revendication 1, caractérisé en ce que l'on refoule la composition pâteuse dans les extrémités des canaux à obturer par sérigraphie ou au pochoir (2).

3. Procédé selon la revendication 1, caractérisé en ce que l'on refoule la composition pâteuse dans les extrémités des canaux à obturer sous l'effet d'un peigne râcleur ou d'une pression gazeuse.

4. Procédé selon la revendication 1, caractérisé en ce que l'on refoule la composition pâteuse dans les extrémités des canaux à obturer à l'aide d'une ou plusieurs seringues à déplacement programmé.

5. Composition pâteuse comprenant les constituants définis dans la revendication 1 pour la mise en

œuvre du procédé selon l'une des revendications 1 à 4, caractérisée en ce qu'elle comprend au moins 70 % en poids de phase solide.

6. Composition pâteuse selon la revendication 5, caractérisée en ce que la phase solide comprend en majeure partie une poudre de matériau de la structure céramique, le complément étant essentiellement constitué par le verre.

7. Composition pâteuse selon les revendications 5 ou 6, caractérisée en ce que le verre comprend en proportions molaires de 18 à 80 % de silice, de 3 à 13 % d'alumine, de 9 à 60 % d'anhydride borique, de 0 à 5,5 % d'oxyde de zinc, de 0 à 17 % d'oxyde de baryum et de 0 à 14 % d'oxyde de sodium.

8. Composition selon la revendication 7, caractérisée en ce que le verre comprend environ 71 % de silice, 3,7 % d'alumine, 15,5 % d'anhydride borique, 1,5 % d'oxyde de zinc et 8 % d'oxyde de sodium.

9. Composition selon la revendication 7, caractérisée en ce que le verre comprend environ 23 % de silice, 8 % d'alumine, 51 % d'anhydride borique, 15 % d'oxyde de baryum et 2,7 % d'oxyde de sodium.

10. Composition pâteuse selon les revendications 5 ou 6, caractérisée en ce que le verre comprend en proportions molaires de 50 à 80 % d'oxyde de germanium, 1 à 20 % d'oxyde de magnésium, 0 à 20 % d'oxyde de calcium, 0 à 20 % d'oxyde de strontium, 0 à 20 % d'oxyde de zinc, 1 à 10 % d'alumine, 0 à 50 % de monoxyde de plomb, 0 à 10 % d'oxyde de sodium et/ou de potassium, et de 0 à 20 % de fluorure de strontium.

11. Composition selon la revendication 10, caractérisée en ce que le verre comprend en proportions molaires environ 60 % d'oxyde de germanium, 10 % d'oxyde de magnésium, 10 % d'oxyde de calcium, 5 % d'oxyde de zinc, 10 % d'alumine et 5 % d'oxyde de sodium.

12. Composition selon la revendication 10, caractérisée en ce que le verre comprend en proportions molaires environ 57 % d'oxyde de germanium, 9,5 % d'oxyde de magnésium, 14 % d'oxyde de calcium, 5 % d'oxyde de zinc, 5 % d'alumine et 10 % de monoxyde de plomb.

13. Composition pâteuse selon les revendications 5 ou 6, caractérisé en ce que le verre comprend en proportions molaires de 40 à 80 % d'oxyde de germanium, 6 à 30 % d'anhydride borique, 0 à 20 % de monoxyde de calcium, 0 à 20 % d'oxyde de zinc et 0 à 50 % de monoxyde de plomb.

14. Composition selon la revendication 13, caractérisée en ce que le verre comprend en proportions molaires environ 43 % d'oxyde de germanium, 26 % d'anhydride borique, 16 % d'oxyde de calcium, 11 % d'oxyde de zinc et 4 % de monoxyde de plomb.

15. Composition selon les revendications 5 ou 6, caractérisé en ce que le verre comprend en proportions molaires de 30 à 80 % d'oxyde de germanium, 6 à 30 % d'anhydride borique, 0 à 20 % d'oxyde de calcium, 0 à 20 % d'oxyde de magnésium, 0 à 20 % d'oxyde de zinc, 5 à 20 % d'alumine et 0 à 50 % de monoxyde de plomb.

16. Composition selon la revendication 15, caractérisé en ce que le verre contient en proportions molaires environ 37,5 % d'oxyde de germanium, 28 % d'anhydride borique, 7 % d'oxyde de calcium, 10 % d'oxyde de magnésium, 9,5 % d'oxyde de zinc et 8 % d'alumine.

17. Composition selon les revendications 5 ou 6, caractérisée en ce que le verre comprend en proportions molaires au moins 30 % d'anhydride borique, 1 à 55 % d'oxyde de zinc, 0 à 5 % d'anhydride vanadique et 0 à 5 % d'alumine.

18. Composition selon la revendication 17, caractérisée en ce que le verre comprend en proportions molaires environ 37 % d'anhydride borique, 54 % d'oxyde de zinc, 5 % d'anhydride vanadique et 4 % d'alumine.

## Claims

1. A method of selectively plugging the ends of parallel ducts (3, 5) in a ceramic structure, characterized in that a paste compound (8) is prepared with a solid phase and a liquid phase, the solid phase comprising a powder of a glass whose extension coefficient is close to that of the ceramic structure, and the liquid phase containing a solvent, a plasticizer and an additive which reduces the adherence of the paste to a paste applicator tool, that said paste is pushed into the ends of the ducts (5) which are to be plugged by means of the applicator tool (7) and that the ceramic structure is submitted to a thermal treatment to cause the paste to adhere to the walls of the ducts and then to become solidified.

2. A method according to claim 1, characterized in that the paste compound is pushed into the ends of the ducts which are to be plugged by means of a serigraphic technique or by means of a pattern screen (2).

3. A method according to claim 1, characterized in that the paste compound is pushed into the ends of the ducts which are to be plugged by means of a scraper comb or by gas pressure.

4. A method according to claim 1, characterized in that the paste compound is pushed into the ends of the ducts which are to be plugged by means of one or more syringues which are moved according to a program.

5. A paste compound including the components defined in claim 1 for realizing the method according to one of the claims 1 to 4, characterized in that it comprises in weight at least 70 % solid phase.

6. A paste compound according to claim 5, characterized in that the solid phase comprises in major part a powder of the substance from which the ceramic structure is made, the rest being constituted mainly by the glass.

7. A paste compound according to the claims 5 or 6, characterized in that the glass comprises in molar percentages between 18 and 80 % silica, between 3 and 13 % alumina, between 9 and 60 % boron anhydride, between 0 and 5.5 % zinc oxide, between 0 and 17 % barium oxide and between 0 and 14 % sodium oxide.

8. A compound according to claim 7, characterized in that the glass comprises about 71 % silica, 3.7 % alumina, 15.5 % boron anhydride, 1.5 % zinc oxide and 8 % sodium oxide.

9. A compound according to claim 7, characterized in that the glass comprises about 23 % silica, 8 % alumina, 51 % boron anhydride, 15 % barium oxide and 2.7 % sodium oxide.

10. A paste compound according to claims 5 or 6, characterized in that the glass comprises in molar percentages between 50 and 80 % germanium oxide, between 1 and 20 % magnesium oxide, between 0 and 20 % calcium oxide, between 0 and 20 % calcium oxide, between 0 and 20 % strontium oxide, between 0 and 20 % zinc oxide, between 1 and 10 % alumina, between 0 and 50 % lead monoxide, between 0 and 10 % sodium oxide and/or potassium oxide and between 0 and 20 % strontium fluoride.

11. A compound according to claim 10, characterized in that the glass comprises in molar percentages about 60 % germanium oxide, 10 % magnesium oxide, 10 % calcium oxide, 5 % zinc oxide, 10 % alumina and 5 % sodium oxide.

12. A compound according to claim 10, characterized in that the glass comprises in molar percentages about 57 % germanium oxide, 9.5 % magnesium oxide, 14 % calcium oxide, 5 % zinc oxide, 5 % alumina and 10 % lead monoxide.

13. A paste compound according to claims 5 or 6, characterized in that the glass comprises in molar percentages between 40 and 80 % germanium oxide, between 6 and 30 % boron anhydride, between 0 and 20 % calcium monoxide, between 0 and 20 % zinc oxide and between 0 and 50 % lead monoxide.

14. A compound according to claim 13, characterized in that the glass comprises in molar percentages about 43 % germanium oxide, 26 % boron anhydride, 16 % calcium oxide, 11 % zinc oxide and 4 % lead monoxide.

15. A compound according to claims 5 or 6, characterized in that the glass comprises in molar percentages between 30 and 80 % germanium oxide, between 6 and 30 % boron anhydride, between 0 and 20 % calcium oxide, between 0 and 20 % magnesium oxide, between 0 and 20 % zinc oxide, between 5 and 20 % alumina and between 0 and 50 % lead monoxide.

16. A compound according to claim 15, characterized in that the glass contains in molar percentages about 37.5 % germanium oxide, 28 % boron anhydride, 7 % calcium oxide, 10 % magnesium oxide, 9.5 % zinc oxide and 8 % alumina.

17. A compound according to claims 5 or 6, characterized in that the glass comprises in molar percentages at least 30 % boron anhydride, between 1 and 55 % zinc oxide, between 0 and 5 % vanadic anhydride and between 0 and 5 % alumina.

18. A compound according to claim 17, characterized in that the glass comprises in molar percentages about 37 % boron anhydride, 54 % oxide, 5 % vanadic anhydride and 4 % alumina.

**Ansprüche**

1. Verfahren zum selektiven Verschließen der Enden von parallelen Kanälen (3, 5) keramischer Strukturen, dadurch gekennzeichnet, daß eine pastöse Masse (8) mit einer festen Phase, die ein Pulver aus einem Glas mit einem Ausdehnungskoeffizienten nahe dem der Keramikstruktur aufweist, und mit einer flüssigen Phase bereitet wird, die ein Lösungsmittel, einen Weichmacher und einen Zusatz aufweist, der das Halften der Paste auf einem Anwendungsorgan verringert, daß die Paste mithilfe des Anwendungsorgans (7) in die Enden der zu verschließenden Kanäle (5) eingedrückt wird und daß die keramische Struktur einer Wärmebehandlung unterzogen wird, die das Haften der Paste auf den Wänden der Kanäle und dann ihre Verfestigung bewirkt.

2. Verfahren nach Anspruch 1, dadurch gekennzeichnet, daß die pastöse Masse durch Serigraphie oder mit einer Schablone (2) in die Enden der zu verschließenden Kanäle hineingedrückt wird.

3. Verfahren nach Anspruch 1, dadurch gekennzeichnet, daß die pastöse Masse unter Einwirkung eines Abstreichkamms oder eines Gasdrucks in die Enden der zu verschließenden Kanäle hineingedrückt wird.

4. Verfahren nach Anspruch 1, dadurch gekennzeichnet, daß die pastöse Masse mithilfe einer oder mehrerer Spritzen mit programmierter Verschiebung in die Enden der zu verschließenden Kanäle hineingedrückt wird.

5. Pastöse Masse, die die im Anspruch 1 definierten Bestandteile aufweist, für die Anwendung des Verfahrens nach einem der Ansprüche 1 bis 4, dadurch gekennzeichnet, daß sie mindestens 70 Gew.-% fester Phase aufweist.

6. Pastöse Masse nach Anspruch 5, dadurch gekennzeichnet, daß die feste Phase zum größten Teil ein Pulver aus dem Material der Keramikstruktur aufweist, wobei der Rest im wesentlichen aus dem Glas besteht.

7. Pastöse Masse nach den Ansprüchen 5 oder 6, dadurch gekennzeichnet, daß das Glas in Molarverhältnissen zwischen 18 und 80 % Siliziumdioxid, zwischen 3 und 13 % Aluminiumoxid, zwischen 9 und 60 % Boranhydrid, höchstens 5,5 % Zinkoxid, höchstens 17 % Bariumoxid und höchstens 14 % Natriumoxid aufweist.

8. Pastöse Masse nach Anspruch 7, dadurch gekennzeichnet, daß das Glas etwa 71 % Siliziumdioxid, 3,7 % Aluminiumoxid, 15,5 % Boranhydrid, 1,5 % Zinkoxid und 8 % Natiumoxid aufweist.

9. Pastöse Masse nach Anspruch 7, dadurch gekennzeichnet, daß das Glas etwa 23 % Siliziumdioxid, 8 % Aluminiumoxid, 51 % Boranhydrid, 15 % Bariumoxid und 2,7 % Natriumoxid aufweist.

10. Pastöse Masse nach den Ansprüchen 5 oder 6, dadurch gekennzeichnet, daß das Glas in Molarverhältnissen zwischen 50 und 80 % Germaniumoxid, zwischen 1 und 20 % Magnesiumoxid, höchstens 20 % Calciumoxid, höchstens 20 % Strontiumoxid, höchstens 20 % Zinkoxid, zwischen 1 und 10 % Aluminiumoxid, höchstens 50 % Bleimonoxid, höchstens 10 % Natrium- und/oder Kaliumoxid und höchstens 20 % Strontiumfluorid enthält.

11. Masse nach Anspruch 10, dadurch gekennzeichnet, daß das Glas in Molarverhältnissen etwa 60 % Germaniumoxid, 10 % Magnesiumoxid, 10 % Calciumoxid, 5 % Zinkoxid, 10 % Aluminiumoxid und 5 % Natriumoxid enthält.

12. Masse nach Anspruch 10, dadurch gekennzeichnet, daß das Glas in Molarverhältnissen etwa 57 % Germaniumoxid, 9,5 % Magnesiumoxid, 14 % Calciumoxid, 5 % Zinkoxid, 5 % Aluminiumoxid und 10 % Bleimonoxid enthält.

13. Pastöse Masse nach den Ansprüchen 5 oder 6, dadurch gekennzeichnet, daß das Glas in Molarverhältnissen zwischen 40 und 80 % Germaniumoxid, zwischen 6 und 30 % Boranhydrid, höchstens 20 % Calciummonoxid, höchstens 20 % Zinkoxid und höchstens 50 % Bleimonoxid enthält.

14. Masse nach Anspruch 13, dadurch gekennzeichnet, daß das Glas in Molarverhältnissen etwa 43 % Germaniumoxid, 26 % Boranhydrid, 16 % Calciumoxid, 11 % Zinkoxid und 4 % Bleimonoxid enthält.

15. Masse nach den Ansprüchen 5 oder 6, dadurch gekennzeichnet, daß das Glas in Molarverhältnissen zwischen 30 und 80 % Germaniumoxid, zwischen 6 und 30 % Boranhydrid, höchstens 20 % Calciumoxid, höchstens 20 % Magnesiumoxid, höchstens 20 % Zinkoxid, zwischen 5 und 20 % Aluminiumoxid und höchstens 50 % Bleimonoxid enthält.

16. Masse nach Anspruch 15, dadurch gekennzeichnet, daß das Glas in Molarverhältnissen etwa 37,5 % Germaniumoxid, 28 % Boranhydrid, 7 % Calciumoxid, 10 % Magnesiumoxid, 9,5 % Zinkoxid und 8 % Aluminiumoxid enthält.

17. Masse nach den Ansprüchen 5 oder 6, dadurch gekennzeichnet, daß das Glas in Molarverhältnissen mindestens 30 % Boranhydrid, zwischen 1 und 55 % Zinkoxid, höchstens 5 % Vanadinsäureanhydrud und höchstens 5 % Aluminiumoxid enthält.

18. Masse nach Anspruch 17, dadurch gekennzeichnet, daß das Glas in Molarverhältnissen etwa 37 % Boranhydrid, 54 % Zinkoxid, 5 % Vanadinsäure anhydrid und 4 % Aluminiumoxid enthält.